Europäisches Patentamt

European Patent Office

Office européen des brevets

(11) Publication number: **0 307 211**
**A2**

# EUROPEAN PATENT APPLICATION

(21) Application number: 88308325.5

(22) Date of filing: 09.09.88

(51) Int. Cl.⁴: **G 11 B 21/00**
**G 11 B 9/00, G 11 B 11/00**

(30) Priority: 10.09.87 JP 227365/87
30.09.87 JP 247152/87
07.10.87 JP 253156/87

(43) Date of publication of application:
**15.03.89 Bulletin 89/11**

(84) Designated Contracting States: **DE FR GB**

(71) Applicant: **SEIKO INSTRUMENTS INC.**
**31-1, Kameido 6-chome Koto-ku**
**Tokyo 136 (JP)**

(72) Inventor: **Ooumi, Manabu**
**Seiko Instruments Inc. 31-1 Kameido 6-chome**
**Koto-ku Tokyo (JP)**

**Sakuhara, Toshihiko**
**Seiko Instruments Inc. 31-1 Kameido 6-chome**
**Koto-ku Tokyo (JP)**

**Ataka, Tatsuaki**
**Seiko Instruments Inc. 31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) **Memory reading device.**

(57) A memory reading apparatus comprises an output section for reading data stored in a memory (5) comprising at least one needle (8) having a fine tip portion. Positioning means (3, 11, 25) position a tip portion of the needle (8) close to the surface of the memory (5). Scanning means (13) scan the tip portion over the surface of the memory (5) and distance controlling means (11, 12) control the distance between the tip portion and the surface of the memory whilst the tip portion scans thereover.

*F I G. 1*

**Description**

## MEMORY READING APPARATUS

This invention relates to memory reading apparatus. In conventional memory reading devices, a magnetic head has been used for reading a memory composed of magnetically recorded media, such as floppy disks, magnetic tapes, and an optical head has been used for media such as optical disks, opto-magnetic disks, etc. A problem exists with such heads in that the memory cannot withstand long term use due to physical contact of the head with the memory. A further problem exists in that very large amounts of data cannot be stored in the memory unless memory cells are made up of a predetermined number of atoms or molecules.

The present invention seeks to provide a memory reading apparatus which enables non-contact reading on an atomic or molecular scale.

According to the present invention, there is provided a memory reading apparatus characterised by comprising an output section for reading data stored in a memory, said output section comprising at least one needle means having a fine tip portion; and control means for controlling the output section, said control means comprising positioning means for positioning a tip portion of the needle means close to a surface of the memory, means for scanning the tip portion over the surface of the memory and distance controlling means for controlling a distance between the tip portion and the surface of the memory whilst the tip portion scans thereover.

Preferably the distance between the tip portion of the needle means and the surface of the memory is maintained so as to cause a tunnel effect.

The distance controlling means may be operative in response to the tunnel effect occurring between the tip portion of the needle means and the surface of the memory.

The needle means may be manufactured by semi-conductor processing techniques.

The positioning means may comprise an X - Y stage, a coarse control section for positioning in an X - Y plane, and an optical micro-scope for examining the distance between the tip portion of the needle means and the surface of the memory. The distance controlling means may comprise a coarse control section and a Z-axis control section.

The invention is illustrated, merely by way of example, in the accompanying drawings, in which:

Figure 1 is a schematic diagram of one embodiment of a memory reading apparatus according to the present invention;

Figures 2 to 6 are enlarged schematic diagrams illustrating various forms of memory for the memory reading apparatus of Figure 1;

Figure 7 shows a modification of the memory reading apparatus of Figure 1;

Figures 8 to 12 are enlarged schematic diagrams illustrating various forms of memory of the memory reading apparatus of Figure 7;

Figure 13 shows a further modification of the memory reading apparatus of Figure 1; and

Figures 14 to 18 are enlarged schematic diagrams illustrating various forms of memory for the memory reading apparatus of Figure 13.

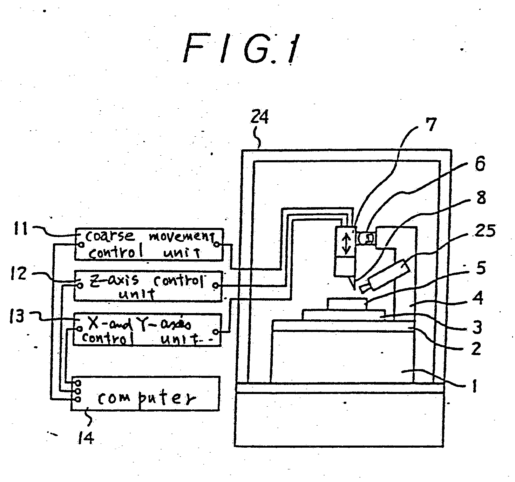

Figure 1 illustrates a memory reading apparatus according to the present invention. On an anti-vibration stand 1 there is mounted a fixed table 2 to which an arm 4 is secured. A needle operating unit 7 is attached to the arm 4. By turning a dial 6, the needle operating unit 7 is vertically moved for carrying out a Z-axis coarse positional adjustment of a probe tip of an electrically conductive needle 8 relative to a memory 5. For an X - Y surface coarse movement, over the memory 5, an X - Y stage 3 and a coarse movement control unit 11 are provided. An optical micro-scope 25 attached to the arm 4 is used at the time when the needle 8 is coarsely positioned relative to the memory 5. Operation of the needle operating unit 7 over the X - Y surface of the memory is carried out by controlling a three dimensional piezo-electric device assembled in the unit 7 with an X- and Y- axis control unit 13. Data stored in the memory 5 is read out by a applying, between the memory 5 and the needle 8, a predetermined voltage ranging from 1 to 100 mV. The coarse movement control unit 11, a Z-axis control unit 12 and the X- and Y- axis control unit 13 are controlled by a computer 14. For example, the computer 14 may be arranged to control the coarse movement control unit 11 and the Z-axis control unit 12 in response to a tunnel effect occurring between a tip portion of the needle 8 and the surface of the memory. The tip portion of the needle may, instead of being made of electrically conductive material, be made of semi-conductive material. The units precluding a power source, the control units and the computer are housed in a shielded box 24.

The stage 3 supporting the memory 5, the coarse movement control unit 11 and the optical micro-scope 25 constitute positioning means for positioning the tip portion of the needle 8 close to the surface of the memory 5. Scanning means for scanning the tip portion of the needle over the surface of the memory consists of the X- and Y- axis control unit 13. Distance controlling means for controlling the distance between the tip portion of the needle and the surface of the memory 5 whilst the tip portion of the needle scans thereover is constituted by the coarse movement control unit 11 and the Z-axis control unit 12. In operation, the needle 8 is scanned in the X-axis and Y-axis directions on the X - Y surface of the memory 5 to measure the tunnel current.

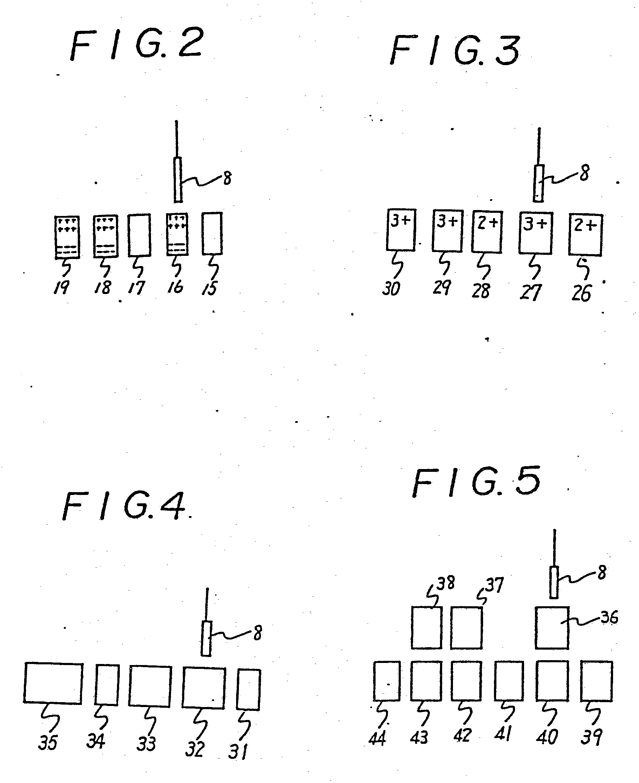

Figure 2 shows the memory 5 consisting of a dielectric material, the data stored therein being read out by the electrically conductive needle 8. The memory 5 consists of memory cells 15 to 19 which are made of dielectric material and in which data is stored in the form of polarisation or de-polarisation of the dielectric material. When the needle is closely positioned over the surface of the memory 5, a relatively large current flows in the needle when the dielectric material is polarised (see cells 16,18,19) due to the tunnel effect, whereas current flow is less in the case of de-polarisation of the dielectric material (see cells 15,17). In this manner, the reading of data from the memory takes place on an atomic scale.

Figure 3 shows another form of the memory 5 consisting of an element which is multi-valent, i.e. can have two or more different valencies, the data stored therein being read out by the electrically conductive needle 8. The multi-valent element stores data on an atomic scale in the form of a difference in numbers of electric charges that a single atom possesses. When the needle is closely positioned over the surface of the memory 5, a relatively large amount of current flows in the needle due to a tunnel effect in the case of atoms 27,29,30, each having a greater number of electric charges. On the other hand, the current flow in the needle is lesser in the case of atoms 26,28 each having a lesser number of electric charges. The reading of data out of the memory thus takes place on an atomic scale.

The form of memory 5 shown in Figure 4 consists of a super lattice, the data being read out by using the electrically conductive needle 8. The memory consists of cells 31 to 35 and stores data on an atomic scale in the form of the configuration of different types of elements. When the needle is closely positioned over the surface of the memory, a tunnel current flows. The size of an electron cloud is given by the measurement of the tunnel current. Each of the different types of elements has a specific size of electron cloud, whereby the reading of data out of the memory thus takes place on an atomic scale.

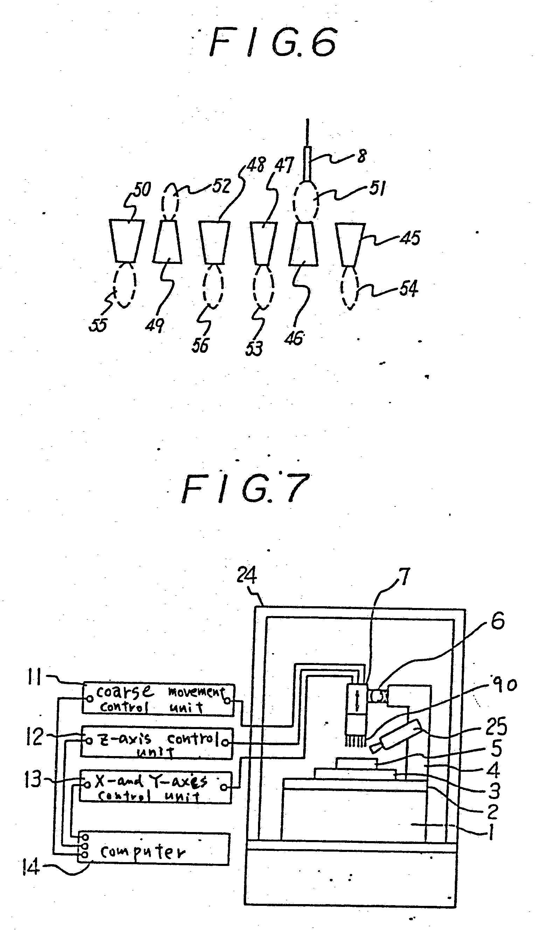

Figure 5 shows the memory 5 in the form of an electrically conductive substance, data being stored therein and read out by the electrically conductive needle 8. The memory 5 stores data on an atomic scale in the form of differences in film thickness in a direction perpendicular to the memory surface. The film thickness differs depending upon position on the surface of the memory of one to several atoms of an electrically conductive element. When the needle is closely positioned over the surface of the memory 5, a tunnel current flows. The level of the tunnel current is a function of distance between the probe tip of the needle and the surface of the memory 5. Therefore, the reading of data out of the memory 5 takes place by measurement of the tunnel current.

The memory 5 as shown in Figure 6 is in the form of molecules in which the orbit of lone pairs extends in specific directions, data stored therein being read out by the electrically conductive needle 8. Data is stored on a molecular scale in the memory 5 with two types of molecules 45 to 50 which have the orbits of localised lone pairs in specific directions. The orbits of lone pairs of some of the molecules (see molecules 46,49,51,52) is outwardly directed and others (see molecules 53 to 56) are inwardly directed. When the needle is closely positioned over the surface of the memory 5, a relatively large tunnel current flows in the needle when held close to molecules 46,49 having the orbit of lone pairs directed outwardly, because the potential energy barrier between the needle and the memory is relatively small. On the other hand, a lesser tunnel current flows in the needle when held close to the molecules 47,48,50 each having the orbit of lone pairs directed inwardly, because the potential energy barrier therebetween is relatively large. In this manner, reading of data on a molecular scale takes place.

Another form of the memory 5 (not illustrated) consists of a polar substance immersed in a polar solvent and data stored therein is read out by the electrically conductive needle 8. Data is stored on a molecular scale in the memory 5 with two types of polar substance, one of which is ionized and the other of which is not ionized. When the needle is closely positioned over such a memory, there is a difference in level of tunnel current depending upon whether or not the polar substance is ionized. In this manner, the reading of the data out of the memory takes place on a molecular scale.

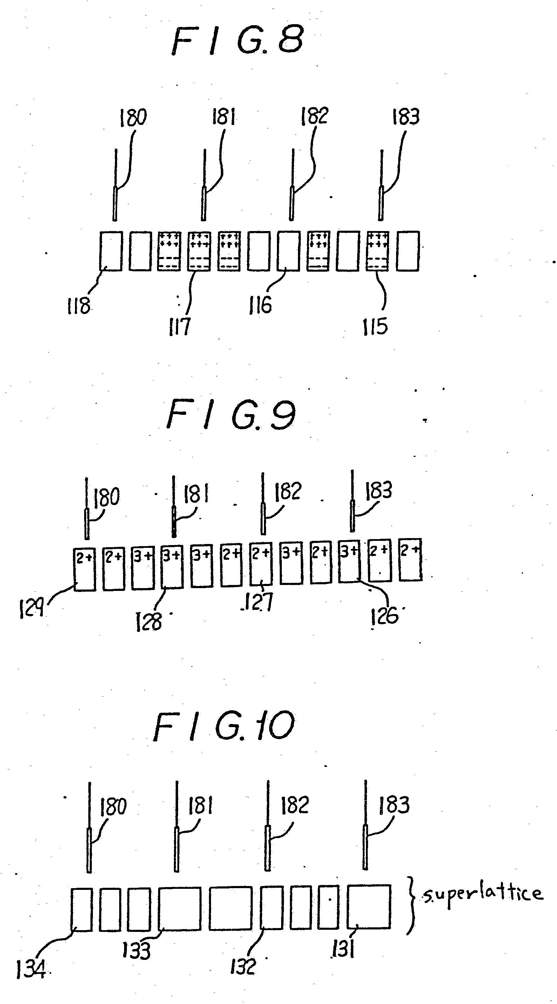

Figure 7 shows a modification of the memory reading apparatus of Figure 1, where the single needle 8 is replaced by a plurality of electrically conductive needles 90. The probe tips of the needles 90 are used to read the memory 5.

Figure 8 shows the memory 5 consisting of a dielectric material, the data stored therein being read out by the electrically conductive needles 90. The memory 5 consists of memory cells 115 to 119 which are made of dielectric material, and in which data is stored in the form of polarisation or de-polarisation of the dielectric material. When the needles are closely positioned over the surface of the memory 5, a relatively large current flows in the needles 183,181 which are held close to the polarised dielectric material (see cells 115, 117) due to the tunnel effect, whereas current flow is less in needles 182, 180 which are held close to the de-polarised dielectric material (see cells 116, 118). In this manner, the reading of data from the memory takes place on an atomic scale.

Figure 9 shows another form of the memory 5 consisting of an element which is multi-valent, i.e. can have two or more different valencies, the data stored therein being read out by the electrically conductive needles 90. The multi-valent element stores data on an atomic scale in the form of a difference in numbers of electric charges that a single atom possesses. When the needles are closely positioned over the surface of the memory 5, a relatively large tunnel current flows in the needles 183, 181 held close to atoms 126, 128, each having a greater number of electric charges. On the other hand, a lesser tunnel current flows in the needles 182, 180 held close to atoms 127, 129 which have a lesser number of electric charges. The reading of data out of the memory thus takes place on an atomic scale.

The form of memory shown in Figure 10 consists of a super lattice, the data being read out by using the electrically conductive needles 90. The memory consists of relatively large sized atoms 131, 133 and relatively small sized atoms 132, 134 which can be discriminated by the tunnel current flowing in the needles 90. The reading of data out of the memory thus takes place on an atomic scale.

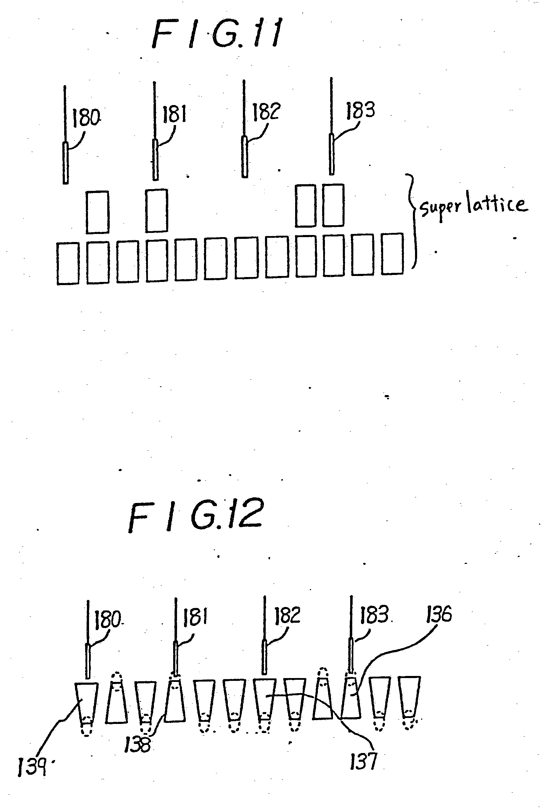

Figure 11 shows the memory 5 in the form of an electrically conductive substance, data being stored therein and read out by the electrically conductive needles 90. The memory 5 stores data on an atomic scale in the form of differences in film thickness in a direction perpendicular to the memory surface. The film thickness differs depending upon position on the surface of the memory of one to several atoms of an electrically conductive element. When the needles are closely positioned over the surface of the memory 5, a relatively large tunnel current flows in needles 181, 183 which are held close to portions where the film thickness is larger, whereas a smaller tunnel current flows in needles 180, 182 which are held close to portions where the film thickness is relatively small. Therefore, the reading of data from the memory 5 takes place on an atomic scale.

The memory 5 as shown in Figure 12 is in the form of molecules in which the orbit of lone pairs extends in specific directions, data stored therein being read out by the electrically conductive needles 90. Data is stored on a molecular scale in the memory 5 with two types of molecules which have the orbits of localised lone pairs in specific directions. The orbit of lone pairs of some of the molecules is outwardly directed and others are inwardly directed. When the needles are closely positioned over the surface of the memory 5, a relatively large tunnel current flows in the needles 183, 181 when held close to molecules 136, 138 having the orbit of lone pairs directed outwardly, because the potential energy barrier between the needles and the memory is relatively small. On the other hand, a relatively small tunnel current flows in the needles 189, 187 when held close to molecules 137, 139 each having the orbit of lone pairs directed inwardly, because the potential energy barrier therebetween is relatively large. In this manner, reading of data on a molecular scale takes place.

Another form of memory 5 (not illustrated) consists of a polar substance immersed in a polar solvent and data stored therein is read out by the electrically conductive needles 90. Data is stored on a molecular scale in the memory 5 with two types of polar substance, one of which is ionized and the other of which is not ionized. When the needles are closely positioned over such a memory, there is a difference in level of tunnel current depending upon whether or not the polar substance is ionized. In this manner, the reading of data out of the memory takes place on a molecular scale.

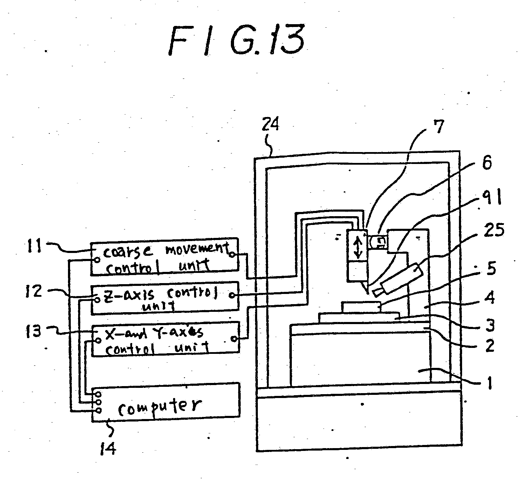

Figure 13 shows another modification of the memory reading apparatus of Figure 1, where the needle 8 is replaced by an electrically conductive needle device 91 having minute needle tips. The needle device 91 consists of alternate conductive portions and insulating portions arranged on a semi-conductor substrate, and an electrically conductive needle tip made of one to several atoms attached to the conductive portion. This needle device can be produced by minutely shaping an electrically conductive layer grown on a semi-conductor substrate by an etching process.

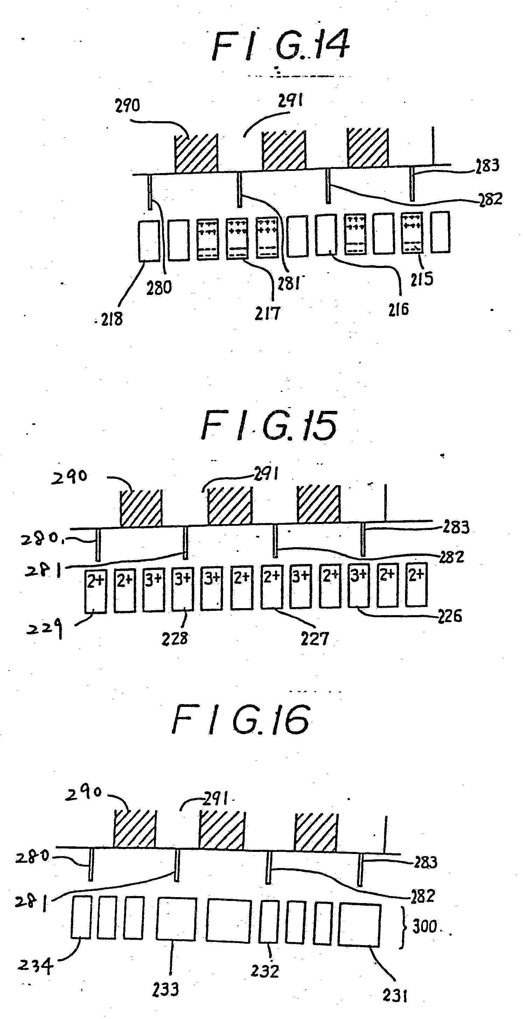

Figure 14 shows the memory 5 consisting of a dielectric material, the data stored therein being read out by the electrically conductive needle tips of the needle device 91. The memory consists of a dielectric material, in which data is stored in the form of polarisation or de-polarisation of the dielectric material. When the needle tips are closely positioned over one of the dielectric molecules on the surface of the memory 5, a relatively large current flows in the needle tips 283, 281 when the dielectric material is polarised (see molecules 215, 217) due to the tunnel effect, whereas current flow is less in the case of the needle tips 282, 280 which are held close to the de-polarised dielectric material (see molecules 216, 218). In this manner, the reading of data from the memory takes place on an atomic scale. In Figure 14 reference numerals 290, 291 indicate an insulating portion and a conductive portion of the needle device 91.

Figure 15 shows another form of the memory 5 consisting of an element which is multi-valent, i.e. can have two or more different valencies, the data stored therein being read out by the electrically conductive needle device 91. The multi-valent element stores data on an atomic scale in the form of a difference in numbers of electric charges that a single atom possesses. When the needle tips are closely positioned over the surface of the memory 5, a relatively large current flows, due to the tunnel effect, in needle tips 238, 281 which are close to atoms 226, 228, each having a greater number of electric charges. On the other hand, the current flow in the needle tips 282, 280 is less in the case of atoms 227, 229 each having a lesser number of electric charges. The reading of data out of the memory thus takes place on an atomic scale.

The form of memory 5 shown in Figure 16 consists of a super lattice, the data being read out by using the electrically conductive needle device 91. The memory stores data on an atomic scale in the form of the configuration of different types of elements. When the needle tips 280 to 283 are closely positioned over the surface of the memory, relatively large size atoms 231, 233 and relatively small size atoms 232, 234 can be discriminated from each other due to the tunnel effect. Thus the reading of data out of the memory can take place on an atomic scale.

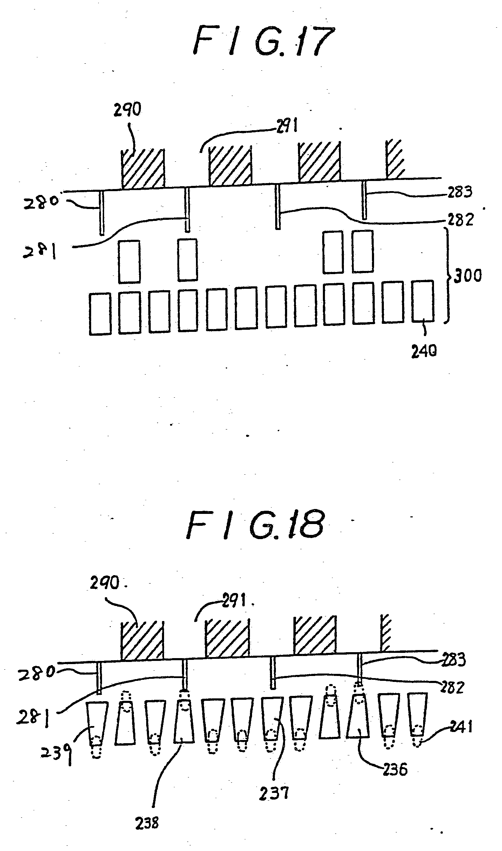

Figure 17 shows the memory 5 in the form of an electrically conductive substance, data being stored therein and read out by the electrically conductive needle device 91. The memory 5 stores data on an atomic scale in the form of differences in film thickness in a direction perpendicular to the memory surface. The film thickness differs depending upon position on the surface of the memory of one to several atoms of an electrically conductive element. When a needle tip is closely positioned over the surface of the memory 5, a relatively large tunnel current flows in the needle tips 281, 283 which are close to portions where the film thickness is relatively large, whereas a relatively small tunnel current flows in the needle tips 280, 282 which are close to portions where the film thickness is relatively small. Therefore, the reading of data out of the memory 5 takes place by measurement of the tunnel current.

The memory 5 as shown in Figure 18 is in the form of molecules in which the orbit of lone pairs extends in specific directions, data stored therein being read out by the electrically conductive needle device 91. Data is stored on a molecular scale in the memory 5 with two types of molecules which have the orbits of localised lone pairs in specific directions. The orbit of lone pairs of some of the molecules (see molecules 237, 239, 241) is outwardly directed and others (see molecules 236, 238) are inwardly directed. When the needle tips 283, 281 are closely positioned over the surface of the memory 5 close to the molecules 236, 238, a relatively large tunnel current flows because the potential energy barrier between the needle tips and the molecules 236, 238 is relatively small. On the other hand, a lesser tunnel current flows in the needle tips 282, 280 when held close to the molecules 237, 239, each having the orbit of lone pairs directed inwardly, because the potential energy barrier therebetween is relatively large. In this manner, reading of data on a molecular scale takes place.

Another form of the memory 5 (not illustrated) consists of a polar substance immersed in a polar solvent and data stored therein is read out by the electrically conductive needle device 91. Data is stored on a molecular scale in the memory 5 with two types of polar substance, one of which is ionized and the other of which is not ionized. When the needle tips are closely positioned over such a memory, there is a difference in the level of tunnel current depending upon whether or not the polar substance is ionized. In this manner, the reading of data out of the memory takes place on a molecular scale.

## Claims

1. A memory reading apparatus characterised by comprising an output section for reading data stored in a memory (5), said output section comprising at least one needle means (8,90,91) having a fine tip portion; and control means for controlling the output section, said control means comprising positioning means (3,11,25) for positioning a tip portion of the needle means close to a surface of the memory (5), means (13) for scanning the tip portion over the surface of the memory (5) and distance controlling means (11,12) for controlling a distance between the tip portion and the surface of the memory whilst the tip portion scans thereover.

2. A memory reading apparatus as claimed in claim 1, characterised in that the distance between the tip portion of the needle means (8,90,91) and the surface of the memory (5) is maintained so as to cause a tunnel effect.

3. A memory reading apparatus as claimed in claim 2, characterised in that the distance controlling means (11,12) is operative in response to the tunnel effect occurring between the tip portion of the needle means (8,90,91) and the surface of the memory (5).

4. A memory reading apparatus as claimed in any preceding claim characterised in that the needle means (91) is manufactured by semiconductor processing techniques.

5. A memory reading apparatus as claimed in any preceding claim characterised in that a dielectric material is used as the memory (5).

6. A memory reading apparatus as claimed in any of claims 1 to 4 characterised in that a multi-valent element is used as the memory (5).

7. A memory reading apparatus as claimed in any of claims 1 to 4 characterised in that a super lattice in which elements of different kinds are configured is used as the memory (5).

8. A memory reading apparatus as claimed in any of claims 1 to 4 characterised in that a film whose thickness differs depending upon position is used as the memory (5).

9. A memory reading apparatus as claimed in any of claims 1 to 4 characterised in that molecules whose orbit of lone pairs extends in specific directions is used as the memory (5).

10. A memory reading apparatus as claimed in any of claims 1 to 4 characterised in that a polar compound which is immersed in a polar solvent is used as the memory (5).

11. A memory reading apparatus as claimed in any preceding claim characterised in that the positioning means comprises an X - Y stage (3), a coarse control section (11) for positioning in an X - Y plane, and an optical micro-scope (25) for examining the distance between the tip portion of the needle means and the surface of the memory (5).

12. A memory reading apparatus as claimed in any preceding claim characterised in that the distance controlling means comprises a coarse control section (11) and a Z-axis control section (12).

# F I G. 1

F I G. 2

F I G. 3

F I G. 4.

F I G. 5

# F I G. 6

# F I G. 7

FIG.8

FIG.9

FIG.10

# F I G. 11

180    181    182    183

super lattice

# F I G. 12

180    181    182    183    136

139    138    137

# F I G.13

coarse movement control unit

Z-axis control unit

X-and Y-axes control unit

computer

# FIG.14

290  291

283

282

280

281  215

218  217  216

# FIG.15

290  291

283

280,

282

281

| 2+ | 2+ | 3+ | 3+ | 3+ | 2+ | 2+ | 3+ | 2+ | 3+ | 2+ | 2+ |
|----|----|----|----|----|----|----|----|----|----|----|----|

226

229  228  227

# FIG.16

290  291

280

283

281

282

} 300

234

233  232  231

# F I G. 17

290

291

280

283

282

281

300

240

# F I G. 18

290

291

280

283

282

281

239

241

238

237

236